# EUROPEAN PATENT APPLICATION

(11) **EP 1 571 474 A1**
(43) Date of publication of application: **07.09.2005**
(21) Application number: 05090044.8
(22) Date of filing: 24.02.2005
(51) Int. Cl.: G02B 6/38, G02B 6/42

(54) **Small form factor transceiver front panel adapter**

(30) Priority: 25.02.2004 US 786744
(71) Applicant: Infineon Technologies AG, 81669 München (DE)
(72) Inventor: Duncan, James, Loveland CO 80538 (US)
(74) Representative: Müller, Wolfram Hubertus

(57) **Abstract**

A transceiver with a housing, a transceiver receptacle, and a first and second adapter. The housing is configured for connection to a host. The transceiver receptacle is coupled to the housing, and the transceiver receptacle has a first side defining a first interface portion and a second side defining a second interface portion. The first adapter has a first connection portion configured to couple with the first interface portion. The second adapter has a second connection portion configured to couple with the second interface portion. The transceiver receptacle is configured to interface with a first front panel opening of a network device when the first and second adapters are not coupled with the transceiver receptacle. Also, the transceiver receptacle is configured interface with a second front panel opening of a network device when the first and second adapters are coupled with the transceiver receptacle. The first and second front panel openings on the network device are of different sizes.

## Description

### Background

The present invention relates to a transceiver for an optical transmission system. More particularly, the present invention relates to an adapter for a small form factor transceiver.

Fiber optic transceivers are used in a variety of applications, including storage area networks (SANs), local area networks (LANs), Fibre Channel, Gigabit Ethernet, and synchronous optical network (SONET) applications. Fiber optic transceivers can be used as the network interface in mainframe computers, workstations, servers, and storage devices. Fiber optic transceivers can also be used in a broad range of network devices, such as bridges, routers, hubs, and local and wide area switches.

Small form factor (SFF) transceiver modules and associated fiber optic connectors have been increasingly used to reduce the size of fiber optical connectors while maintaining or reducing costs. Several different designs of connectors have been introduced by various manufacturers that can be used in SFF transceivers. For example, such standard optical connectors include LC, MT-RJ, and SC connectors.

Each of the various types of transceivers have varying configurations for the associated optical connectors, which may be either an LC, MT-RJ or SC connector. The features on a transceiver that receive and mate a specific connector are called a receptacle. When a transceiver is adapted to a network device, the transceiver receptacle is often integrated with a bezel or front panel of the network device. Therefore, the front panel opening on the network device has standard specific dimensions for each particular type of connector on the transceiver receptacle. On occasion, it may be desirable to have a network device with a front panel opening of one connector type different than the transceiver connector type. Once a network device is developed and built, it is typically not desirable to modify the network infrastructure by replacing the bezel or front panel, but rather remove and replace the transceivers. By replacing transceivers with a type that allows for an adaptable receptacle, a choice is then allowed for different front panel configurations. Changing the configuration of the transceiver receptacle without modifying the network device would be a desirable addition to the art.

### Summary

The present invention is a modifiable transceiver module for use in an optical network device. The transceiver includes a housing, a transceiver receptacle, and a first and second adapter. The housing is configured for connection to a host. The transceiver receptacle is coupled to the housing, and the transceiver receptacle has a first side defining a first interface portion and a second side defining a second interface portion. The first adapter has a first connection portion configured to couple with the first interface portion. The second adapter has a second connection portion configured to couple with the second interface portion. The transceiver receptacle is configured to interface with a first front panel opening of a network device when the first and second adapters are not coupled with the transceiver receptacle. Also, the transceiver receptacle is configured to interface with a second front panel opening of a network device when the first and second adapters are coupled with the transceiver receptacle. The first and second front panel openings on the network device are of different sizes.

### Brief Description of the Drawings

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Figure 1 illustrates a transceiver with a non-adapted receptacle extending through a front panel opening.
Figure 2 illustrates a transceiver and two adapters.
Figure 3 illustrates an adapter in accordance with the present invention.
Figure 4 illustrates two adapters coupled to a transceiver in accordance with the present invention.
Figure 5 illustrates an adapted transceiver extending through a front panel opening in accordance with the present invention.

### Detailed Description

In the following Detailed Description, reference is made to the accompanying drawings, which form a part hereof, and in which is shown by way of illustration specific embodiments in which the invention may be practiced. In this regard, directional terminology, such as "top," "bottom," "front," "back," "leading," "trailing," etc., is used with reference to the orientation of the Figure(s) being described. Because components of embodiments of the present invention can be positioned in a number of different orientations, the directional terminology is used for purposes of illustration and is in no way limiting. It is to be understood that other embodiments may be utilized and structural or logical changes may be made without departing from the scope of the present invention. The following detailed description, therefore, is not to be taken in a limiting sense, and the scope of the present invention is defined by the appended claims.

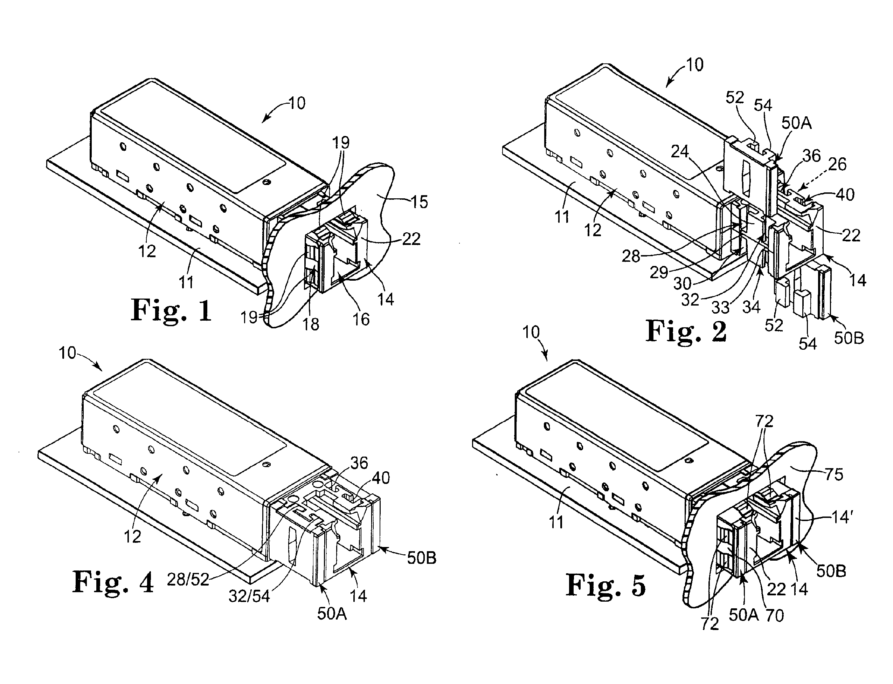

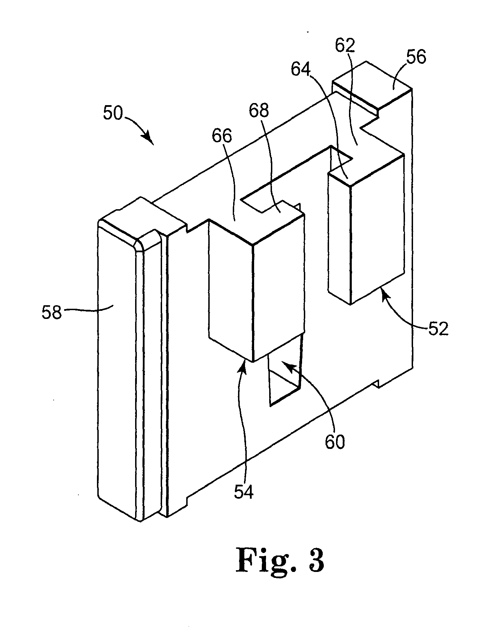

Figure 1 illustrates the transceiver 10. Transceiver 10 includes transceiver body 12 and transceiver receptacle 14. Transceiver body 12 is mounted on or connectable to a host 11, such as a board, router, computer or other electrical device. Transceiver receptacle 14 extends through an opening in front panel 15, which may be a bezel of a network device. Transceiver receptacle 14 also includes receptacle opening 16 and is configured with first collar 18. First collar 18 includes a plurality of springs 19. Springs 19 help hold transceiver 10 securely within the opening in front panel 15. Receptacle opening 16 is located in first surface 22 of transceiver receptacle 14.

Transceiver 10 is typically used in a data transmission system to couple a host to an optical transmitter such as an optical fiber. At one end, transceiver body 12 is coupled to host 11, and at the other end, transceiver receptacle 14 is coupled to an optical connector. First collar 18 and springs 19 help secure the transceiver receptacle 14 to an opening in front panel 15 of a network device.

In one embodiment, transceiver 10 is a small form factor transceiver configured with an MT-RJ shaped receptacle 14 to interface with a corresponding-shaped opening in front panel 15. In some applications, such a transceiver may actually be configured to function as an LC transceiver, but is configured with an MT-RJ shaped receptacle 14. Consequently, when such a transceiver 10 is coupled to a network device with an LC shaped front panel opening it cannot interface correctly with the network device. Accordingly, receptacle 14 of transceiver 10 must be adaptable to interface with an LC shaped front panel opening.

Figure 2 illustrates receptacle 14 of transceiver 10 being adapted to enlarge the shape of an LC receptacle in accordance with the present invention. In Figure 2, the first collar 18 has been removed to further expose the transceiver receptacle 14. Transceiver receptacle 14 includes a front receptacle surface 22, first side receptacle surface 24, and second side receptacle surface 26 (as illustrated in Figure 2, surface 26 is not readily visible and is facing away from the page). First side receptacle surface 24 is configured with rear upper slot 28, rear lower slot 30, forward upper slot 32 and forward lower slot 34. Rear slots 28 and 30 are separated by rear shelf 29 such that rear slots 28 and 30 are distinct from each other. Similarly, forward slots 32 and 34 are separated by forward shelf 33.

Second side receptacle surface 26 of transceiver receptacle 14 is symmetrical to first side receptacle surface 24. Accordingly, it is also configured with a rear upper slot 36, a rear lower slot 38, a forward upper slot 40 and a forward lower slot 42. Rear slots 36 and 38 are separated by rear shelf 37 such that rear slots 36 and 38 are distinct from each other. Similarly, forward slots 40 and 42 are separated by forward shelf 41. Only upper slots 36 and 40 are visible in Figure 2, while lower slots 38 and 42 are on the back portion of the figure and not visible in Figure 2.

Adapter 50 is specially configured to be received by the various slots in transceiver receptacle 14. In one embodiment, two adapters 50A and 50B are used on transceiver receptacle 14. Adapter 50A is coupled to first side receptacle surface 24 and adapter 50B is coupled to second side receptacle surface 26. Adapters 50 are configured to be received in the slots of first and second side surfaces 24 and 26.

Figure 3 illustrates adapter 50 in accordance with the present invention. Adapter 50 includes first arm 52 and second arm 54. Adapter 50 is configured to have a first side portion 56 and a second side portion 58. Adapter 50 may also include center opening 60. In one embodiment, first and second arms 52 and 54 are "L-shaped" such that a portion of the arms extend out from adapter 50 and a portion juts back parallel to adapter 50. In this way, first arm 52 includes extending arm portion 62 and elbow portion 64. Similarly, second arm 54 includes extending arm portion 66 and elbow portion 68. In the embodiment illustrated in Figure 3, extending arm portions 64 and 68 are elbow-shaped and turn inward toward each other.

Adapter 50 and first and second arms 52 and 54 are configured to mate with the slots provided in transceiver receptacle 14. With reference to Figures 2 and 3, adapters 50A and 50B are coupled to first and second sides 24 and 26, respectively, of receptacle 14. Specifically, first arm 52 of adapter 50A slides into rear upper slot 28 and second arm 54 of adapter 50A slides into forward upper slot 32. Consequently, second side portion 58 of adapter 50A is oriented toward the front of receptacle 14. Adapter 50A will slide down into upper slots 28 and 32 until first and second arms 52 and 54 contact rear shelf 29 and forward shelf 33, respectively. Rear shelf 29 and forward shelf 33 prevent first and second arms 52 and 54 from moving further and help hold adapter 50A in place against first side surface 24. In the illustrated embodiment, slots 28, 30, 32 and 34 are also "L-shaped" to accept the complementary-shaped first and second arms 52 and 54 of adapter 50A.

Similarly, first arm 52 of adapter 50B slides into rear lower slot 38 and second arm 54 of adapter 50B slides into forward lower slot 42. Consequently, second side portion 58 of adapter 50B is also oriented toward the front of receptacle 14. Adapter 50B will slide up into lower slots 38 and 42 until first and second arms 52 and 54 contact rear shelf 37 and forward shelf 41, respectively. Rear shelf 37 and forward shelf 41 prevent first and second arms 52 and 54 from moving up further and help hold adapter 50B in place against second side surface 26. In the illustrated embodiment, slots 36, 38, 40 and 42 are also "L-shaped" to accept the complementary-shaped first and second arms 52 and 54 of adapter 50B.

Figure 4 illustrates adapters 50 coupled to transceiver receptacle 14. First adapter 50A is illustrated coupled to first side surface 24 and second adapter 50B is illustrated coupled to second side receptacle surface 26. First and second arms 52 and 54 of both adapters 50 are mated with slots in first and second side surfaces 24 and 26. First and second arms 52 and 54 of adapter 50A are illustrated in rear upper slot 28 and forward upper slot 32 respectively of first side surface 24. Rear upper slot 36 and forward upper slot 40 of second side surface 26 are illustrated open since first and second arms 52 and 54 of adapter 50B are in lower slots 38 and 42.

In the embodiment of transceiver 10 illustrated in Figure 4, adapter 50A and adapter 50B are constructed to be identical. For this same embodiment of adapters 50A and 50B, however, first side portion 56 is different than second side portion 58. In one application, it is desirable for second side portion 58 to be located adjacent front surface 22 of transceiver receptacle 14. In this way, first and second arms 52 and 54 of adapter 50A are mated with rear upper slot 28 and forward upper slot 32, respectively. Consequently, second side portion 58 of adapter 50A is adjacent front surface 22 of transceiver receptacle 14. First and second arms 52 and 54 of adapter 50B, however, are mated with rear lower slot 38 and forward lower slot 42, respectively. In this way, second side portion 58 of adapter 50B is also located adjacent front surface 22 of transceiver receptacle 14. Thus, the same configured adapter can be used on either side of transceiver receptacle 14, and yet result in having the same side facing the transceiver front.

By providing both upper and lower slots separated by shelves on both first and second side surfaces 24 and 26 of transceiver receptacle 14, a single configuration for adapter 50 can be used, and multiple adapters can then be manufactured and installed on either side of transceiver receptacle 14. By installing adapter 50 in opposite slots, that is, one in the upper slots and the other in the lower slots, the same side of adapter 50 is positioned adjacent front side 22 of transceiver receptacle 14. Providing only a single configuration of adapter 50 will save in manufacturing time, material and costs.

Figure 5 illustrates transceiver 10 as adapted as using adapters 50. Second collar 70 is added over the combination of transceiver receptacle 14 and adapters 50A and 50B forming a converted transceiver receptacle 14'. Second collar 70 includes a plurality of springs 72 that help secure the transceiver receptacle 14' to a larger opening in front panel 75 of a network device. Consequently, transceiver 10, including adapters 50A and 50B is now provided with a wider transceiver receptacle 14'. For example, the original transceiver receptacle 14, illustrated in Figure 1, might have been sized to interface with an MT-RJ shaped opening in front panel 15. Converted transceiver receptacle 14', illustrated in Figure 5, is now sized to interface with an LC shaped opening in front panel 75. In this way, adapters 50 allow a transceiver with a MT-RJ shaped receptacle to be converted to a transceiver with a LC shaped receptacle. In one embodiment, this conversion is accomplished using a single configuration for adapter 50 on either side of transceiver receptacle 14. Both upper and lower slots on both first and second sides of transceiver receptacle 14 may be used, providing flexibility in converting the width dimension of transceiver receptacle 14.

As one skilled in the art will recognize, many differing configurations for adapter 50 and transceiver receptacle 14 may be used to convert the size of transceiver receptacle 14 in accordance with the present invention. For example, the first and second side surfaces 24 and 26 may each define only a single slot. In that case, adapter 50 would include only a single arm configured to be received in the slot defined in first and second side surfaces 24 and 26. Any number of different combinations of slots and arms are possible to couple adapter 50 to transceiver receptacle 14. Further, the slots on first and second side surfaces 24 and 26 could be exchanged with the arms of adapter 50, such that the adapter defined that slots and the side surfaces carried the arms. In addition, the configuration of the slots and arms could take on a variety of shapes and sizes, and is not limited to L-shaped configurations. For example, the arms could be configured to be "S-shaped," "C-shaped," or any of a variety of configurations, with the slots being configured in a complementary fashion.

In one alternative embodiment, adapters 50 are configured with no arms and transceiver receptacle 14 with no slots, and rather, adapters 50 are simply bonded to first and second side surfaces 24 and 26 of transceiver receptacle 14 with some sort of adhesive. Second collar 70 can also provide additional support for holding adapters 50 secure to first and second side surfaces 24 and 26 of transceiver receptacle 14.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

## Claims

1. A transceiver module for use in an optical system, the transceiver comprising:
a housing configured for connection to a host;
a transceiver receptacle coupled to the housing, the transceiver receptacle having a first side defining a first interface portion and a second side defining a second interface portion;
a first adapter having a first connection portion configured to couple with the first interface portion;
a second adapter having a second connection portion configured to couple with the second interface portion; and
wherein the transceiver receptacle is configured to mate with a first front panel opening of a network device when the first and second adapters are not coupled with the transceiver receptacle, and
wherein the transceiver receptacle is configured to mate with a second front panel opening of a network device when the first and second adapters are coupled with the transceiver receptacle, the first and second front panel openings of a network device being of different sizes.

2. The transceiver module of claim 1 wherein the first and second interface portions of the first and second sides are slots.

3. The transceiver module of claim 2 wherein the first and second connection portions of the first and second adaptors are arms extending from the adaptor, the arms of the first and second adapters being shaped to be received within the slots of the first and second sides of the transceiver receptacle.

4. The transceiver module of claim 1 wherein the first interface portion of the first side comprises a rear upper slot, a rear lower slot, a forward upper slot and a forward lower slot, and wherein the second interface portion of the second side comprises a rear upper slot, a rear lower slot, a forward upper slot and a forward lower slot.

5. The transceiver module of claim 4 wherein the first connection portion of the first adaptor comprises a first arm and a second arm each extending from the first adaptor and wherein the first arm of the first adaptor is configured to be received within the forward upper slot of the first side and the second arm of the first adaptor is configured to be received within the rear upper slot of the first side, and wherein the second connection portion of the second adaptor comprises a first arm and a second arm each arm extending from the second adaptor and wherein the first arm of the second adaptor is configured to be received within the forward lower slot of the second side and the second arm of the second adaptor is configured to be received within the rear lower slot of the second side.

6. The transceiver module of claim 5 wherein the first adaptor and the second adaptor are identically configured.

7. The transceiver module of claim 1 wherein the first front panel opening of a network device is an MT-RJ shaped opening and wherein the second front panel opening of a network device is an LC shaped opening.

8. The transceiver module of claim 1 wherein the transceiver receptacle is between 8.1mm and 9.1mm in height and wherein the transceiver receptacle is the between 9.1mm and 10.1mm in width when the first and second adapters are not coupled with the transceiver receptacle and between 12.4mm and 13.3mm in width when the first and second adapters are coupled with the transceiver receptacle.

9. The transceiver module of claim 1 further including a first collar removably coupled over the transceiver receptacle when the first and second adapters are not coupled with the transceiver receptacle, and a second collar removably coupled over the transceiver receptacle when the first and second adapters are coupled with the transceiver receptacle, both the first and second collars having a plurality of springs coupled thereto.

10. A transceiver assembly comprising:
a transceiver module having a first end configured to be coupled with a host device and a second end configured to be coupled to the front panel opening of a network device, the second end having a first dimension and having an initial second dimension;
a first adapter;
a second adapter;
first connection means for coupling the first adapter to the second end of the transceiver module;
second connection means for coupling the second adapter to the second end of the transceiver module; and
wherein connecting the first and second adapter to the second end of the transceiver module changes the initial second dimension to a converted second dimension that is different from the initial second dimension.

11. The transceiver module of claim 10 wherein the first and second connection means include arms and slots provided on the first and second adapter and on the second end of the transceiver module, the arms and slots configured to complement each other such that the arms fit within the slots.

12. The transceiver module of claim 11 wherein second end of the transceiver module includes a first side and a second side, wherein the arms extend from the first and second adapters, and wherein the slots are defined in first and second sides of the second end of the transceiver module.

13. The transceiver module of claim 12 wherein the first adapter is coupled to the first side of the second end of the transceiver module and the second adapter is coupled to the second side of the second end of the transceiver module.

14. The transceiver module of claim 10 wherein the first and second adapters are coupled to the second end of the transceiver module using an adhesive.

15. The transceiver module of claim 10 wherein the first adaptor and the second adaptor are identically configured.

16. The transceiver module of claim 10 wherein the second end of the transceiver having the initial second dimension can be coupled to the front panel opening of a network device with a first dimension and the second end of the transceiver having the converted second dimension can be coupled to the front panel opening of a network device with a second dimension.

17. The transceiver module of claim 10 further including a first collar removably coupled over the second end of the transceiver module when the first and second adapters are not coupled with the second end of the transceiver module, and a second collar removably coupled over the second end of the transceiver module when the first and second adapters are coupled with the second end of the transceiver module, both the first and second collars having a plurality of springs coupled thereto.

18. A method for converting a transceiver initially configured to interface with a first-sized front panel opening of a network device to a transceiver configured to interface with a second-sized front panel opening of a network device comprising:
providing the transceiver with a receptacle configured to be coupled with the first-sized front panel opening of a network device and with an end configured to be coupled with a host device, the receptacle having a first and a second side, wherein the first and second sides each define interface portions;
coupling a first adapter to the first side of the receptacle, the first adapter having a connection portion configured to couple with the interface portion defined by the first side of the receptacle;
coupling a second adapter to the second side of the receptacle, the second adapter having a connection portion configured to couple with the interface portion defined by the second side of the receptacle; and
wherein the transceiver receptacle mates with the second sized-optical connector after the first and second adapters are coupled to the transceiver receptacle.

19. The method of claim 18 further including coupling the transceiver receptacle to a front panel opening of a network device having an LC shape after the first and second adapters are coupled to the transceiver receptacle.
